# EUROPEAN PATENT SPECIFICATION

(11) **EP 1 679 234 B1**
(45) Date of publication and mention of the grant of the patent: **19.10.2011**
(21) Application number: 05257733.5
(22) Date of filing: 15.12.2005
(51) Int. Cl.: B60R 19/18

(54) **Impact energy absorbing structure for vehicle**
Energie-Verzehranordnung für ein Fahrzeug
Structure d'absorption d'energie pour véhicule

(30) Priority: 16.12.2004 JP 2004363930
(43) Date of publication of application: 12.07.2006
(73) Proprietor: Ohtsuka Co., Ltd., Shinagawa-ku Tokyo (JP)
(72) Inventor: Shimoda, Akio, c/o Ohtsuka Co., Ltd, Tokyo (JP)
(74) Representative: Goddard, David John

(56) References cited:
- EP-A- 0 974 495
- EP-A- 1 437 265
- US-A- 1 710 175
- US-A- 6 082 792
- US-A1- 2004 174 025
- US-B1- 6 250 711
- PATENT ABSTRACTS OF JAPAN vol. 2000, no. 06, 22 September 2000 (2000-09-22) & JP 2000 085496 A (AISIN KEIKINZOKU CO LTD), 28 March 2000 (2000-03-28)

## Description

### Field of the Invention

The present invention relates to an impact energy absorbing structure for a vehicle, which cushions a shock to a pedestrian's leg when a pedestrian collides with a bumper cover or other vehicle portion.

### Background of the Invention

With the aim of protecting pedestrians through the introduction of pedestrian head protection standards for passenger cars and the like, the Japanese Ministry of Land, Infrastructure and Transport revised the safety standard for road transportation vehicles (Ordinance No. 6 of the Ministry of Transport in 1951) which specify hood shock cushioning performance and the notification (Notification No. 619 of the Ministry of Land, Infrastructure and Transport in 2002) which specify the details of the standard.

In this standard, a shock received by a head impacter is measured by a test in which a dummy of human head is hit against an automotive hood, and from the test results, it is judged whether or not the vehicle conforms to the safety standard. Along with the revisions made to this standard, there is a trend to protect a pedestrian's legs, which has given rise to the requirement to cushion a shock given to the leg by a bumper portion when a pedestrian collides with a vehicle.

Fig. 14 shows a pedestrian leg protecting structure disclosed in JP 2004-322861 A1. In this structure, a bumper beam 51 having a concave cross section and a bumper cover 52 for covering the bumper beam 51 are disposed, and a foam 53 is disposed between the bumper beam 51 and the bumper cover 52. The foam 53 is installed to the bumper beam 51 in such a manner that the proximal end side of the foam 53 is fitted in a concavity 54 formed on the front side of the bumper beam 51, and the distal end portion of the foam 53 is projected to the bumper cover 52 side. The foam 53 cushions a shock to a pedestrian's leg when a pedestrian collides with a vehicle.

As a material of the foam 53, a polypropylene resin or a polyolefin resin is used. In addition to a collision with a pedestrian, a collision between vehicles is also considered, and the restoration of the foam 53 after collision is also considered. That is to say, the foam 53 is plastically deformed when subjected to a load of a degree such that the foam 53 bottoms. For this reason, in order for the foam 53 not to bottom, the proximal end side of the foam 53 is fitted in the concavity 54 to a length L1, and even if the distal end side of the foam 53 collapses to a length L2, the collapse is allowed to remain in the range of an elastic region so that the foam 53 restores to its original shape.

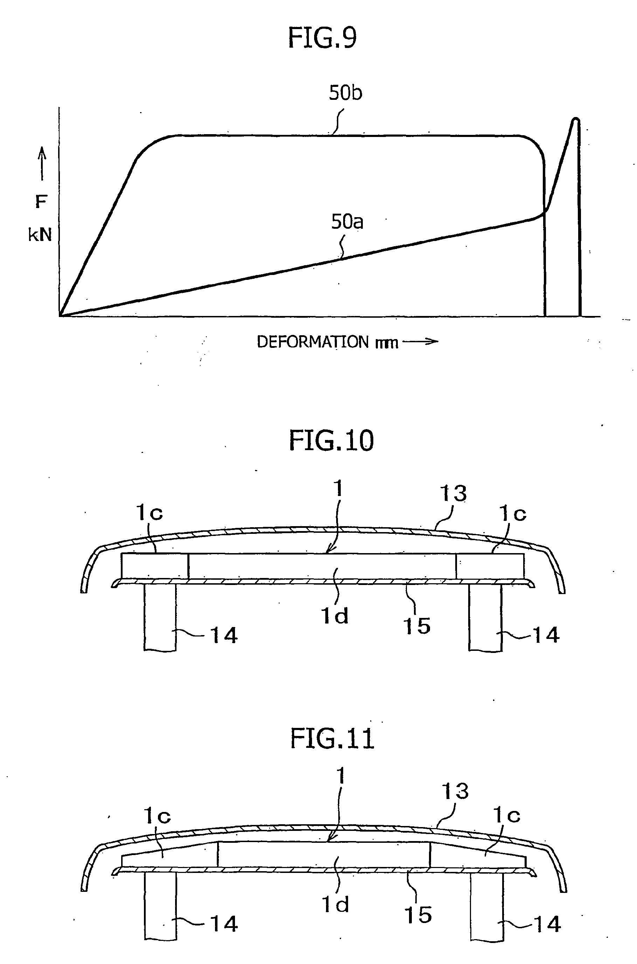

Fig. 9 shows a load-deformation curve. In this figure, the vertical axis represents the load and the horizontal axis the deformation. Since the foam 53 is an elastic body, the load and deformation thereof have a linear relationship as shown by the curve 50a.

As shown by the curve 50b, when the foam 53 is subjected to a load, in the beginning its deformation is small, and when the load reaches a fixed value, the amount of energy suddenly absorbed is larger.

In order to absorb a larger amount of energy as shown by the curve 50b, depending on the type of foam the thickness of the foam must be increased. Therefore, depending on the vehicle type, the foam cannot fit into the space between the bumper cover and the bumper beam, and creating this space increases the length of the vehicle.

EP-A-1 437 265 describes an impact energy absorber in a vehicle to protect a passenger's head in a collision of the vehicle.

JP2000-085496A describes a bumper reinforcement structure to dissipate impact loads over a wider area when a vehicle is in collision with a post or the like.

US 2004/0 174 025 A describes a blow moulded energy absorber for a front bumper structure of a vehicle, which corresponds to the preamble of claim 1.

### Brief Summary of the Invention

An object of the present invention is to provide an impact energy absorbing structure for a vehicle, which can absorb a large amount of energy and can be disposed even in a limited space.

According to the present invention there is provided an impact energy absorbing structure for a vehicle, comprising:
a bumper beam (15) extending in the width direction of a vehicle body (12),
a bumper cover (13) covering the bumper beam,
an impact energy absorber disposed between the bumper beam and the bumper cover, the impact energy absorber being disposed so that the axial direction thereof coincides with the width direction of the vehicle body, where the cross-section of said impact energy absorber has a square shape and where a front surface portion (1 a) of the impact energy absorber facing said bumper cover is curved so as to coincide with the inner surface shape of the bumper cover, characterised in that the impact energy absorber (1) is formed into a cylindrical shape by lapping a band material made of a paper (2, 4) and/or a resin and a band material made of a metal (3) on each other and winding the band materials spirally, and the wall portion thereof is formed with concave (6) and convex (5) portions arranged in a spiral form or a ring form.

The impact energy absorber is formed by lapping a band material made of a paper and/or a resin and a band material made of a metal on each other, and the cross section thereof is formed into a square shape.

According to the above configuration, when a pedestrian collides with the bumper cover, the impact energy absorber is plastically deformed to absorb impact energy, whereby the pedestrian's leg can be protected.

The impact energy absorber is disposed so that the axial direction thereof coincides with the width direction of the vehicle body, and is installed on the front surface of the bumper beam by a clip, screw, band, or adhesion. According to this configuration, the installation is easy, and hence the impact energy absorber can be installed easily in a short period of time even on the car production line.

In the present invention, the thickness or material of at least one band material made of a metal and the band material made of paper and/or a resin constituting the impact energy absorber may be different in each portion in the axial direction in accordance with the strength of each portion in the vehicle body width direction of the bumper cover, and thus the strength of the impact energy absorber may be different in each portion in the vehicle body width direction. Also, the cross-sectional shape thereof preferably changes in the axial direction in accordance with a clearance between the bumper cover and the bumper beam. Further, a portion of the impact energy absorber which faces to the bumper cover side is preferably formed so as to coincide with the inner surface shape of the bumper cover.

In the present invention, a rib extending in the vertical direction may be formed on the front surface of the bumper beam, and the impact energy absorber may be disposed via the rib.

### Brief Description of the Several Views of the Drawing

Fig. 1 is a perspective view of an impact energy absorber 1 used in an embodiment of the present invention;
Fig. 2 is a front view of the impact energy absorber 1 shown in Fig. 1, viewed in the axial direction;
Fig. 3 is an enlarged sectional view of a cross-sectional construction of the impact energy absorber 1 shown in Fig. 1, obtained by cutting a part of the peripheral wall portion of the impact energy absorber 1 in the axial direction;
Fig. 4 is a perspective view showing an external appearance of a motor vehicle 1 in which the impact energy absorber 1 shown in Fig. 1 is disposed in a bumper portion;
Fig. 5 is an exploded perspective view showing a front part of the motor vehicle shown in Fig. 4;
Fig. 6 is an enlarged sectional view of a bumper portion of the motor vehicle shown in Fig. 4;

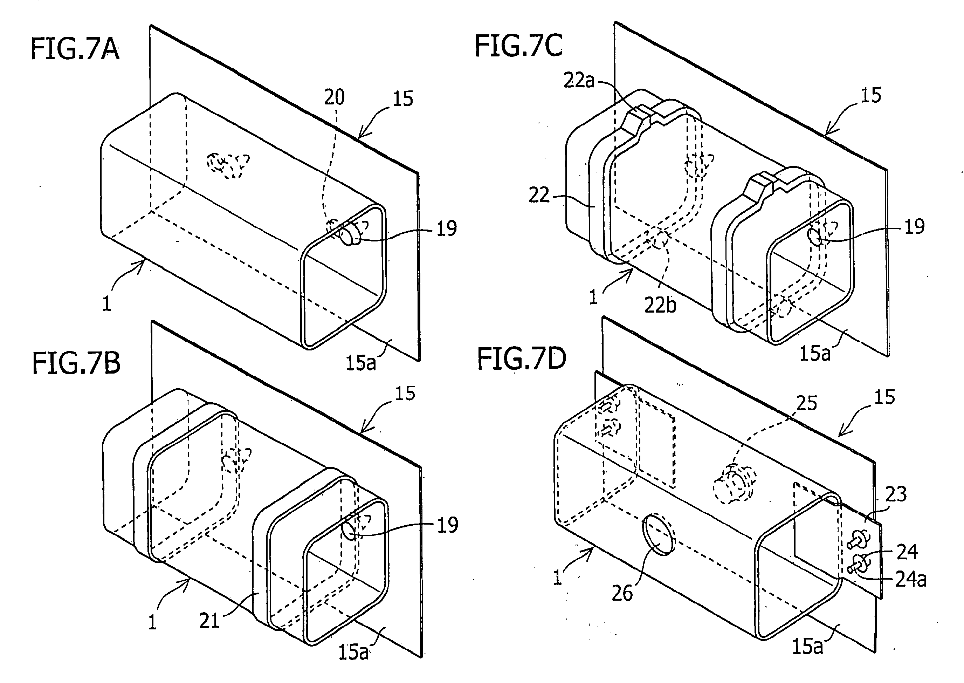

Figs. 7A to 7D are perspective views showing the installation of the impact energy absorber 1 of this embodiment to a bumper beam 15, Fig. 7A being a perspective view showing a state in which the impact energy absorber 1 is fixed by clips 19, Fig. 7B being a perspective view showing a state in which the impact energy absorber 1 is fixed by bands 21 and clips 19, Fig. 7C being a perspective view showing a state in which the impact energy absorber 1 is fixed by holders 22 each having a connecting portion 22a and a hinge portion 22b, and Fig. 7D being a perspective view showing a state in which the impact energy absorber 1 is fixed by bolts 25, attachment members 23, and screw clips 24;
Figs. 8A to 8C are perspective views showing the installation of the impact energy absorber 1 of this embodiment to a bumper beam 15, Fig. 8A being a perspective view showing a state in which the impact energy absorber 1 is fixed by holders 27, Fig. 8B being a perspective view showing a state in which the impact energy absorber 1 is fixed by attachment members 23 and holders 24, and Fig. 8C being a perspective view showing a state in which the impact energy absorber 1 is fixed by C-shaped holders 28;
Fig. 9 is a graph showing load-deformation curves of the impact energy absorber 1 and a comparative example (foam made of a synthetic expanded resin);
Fig. 10 is a plan view showing a state in which the impact energy absorber 1 having different strengths in a central portion 1d and an end portions 1c is installed to the bumper beam 15;
Fig. 11 is a plan view of this embodiment showing a state in which the impact energy absorber 1 having different cross-sectional areas in a central portion 1d and an end portion 1c is installed to the bumper beam 15;
Fig. 12 is a plan view of this embodiment showing a state in which the impact energy absorber 1 is installed to the bumper beam 15 provided with ribs 29;
Fig. 13 is a sectional view showing a state in which the impact energy absorber 1 is installed to the bumper beam 15 by deforming a front surface portion 1a of the absorber 1 in accordance with the shape of a bumper cover 13 of a motor vehicle; and

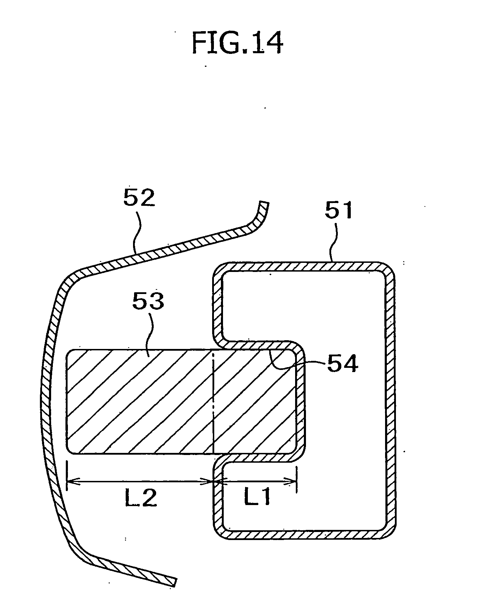

Fig. 14 is a sectional view showing a state in which a foam (impact energy absorber made of an expanded resin) 53 of a conventional example is installed to a bumper beam 51.

### Detailed Description of the Invention

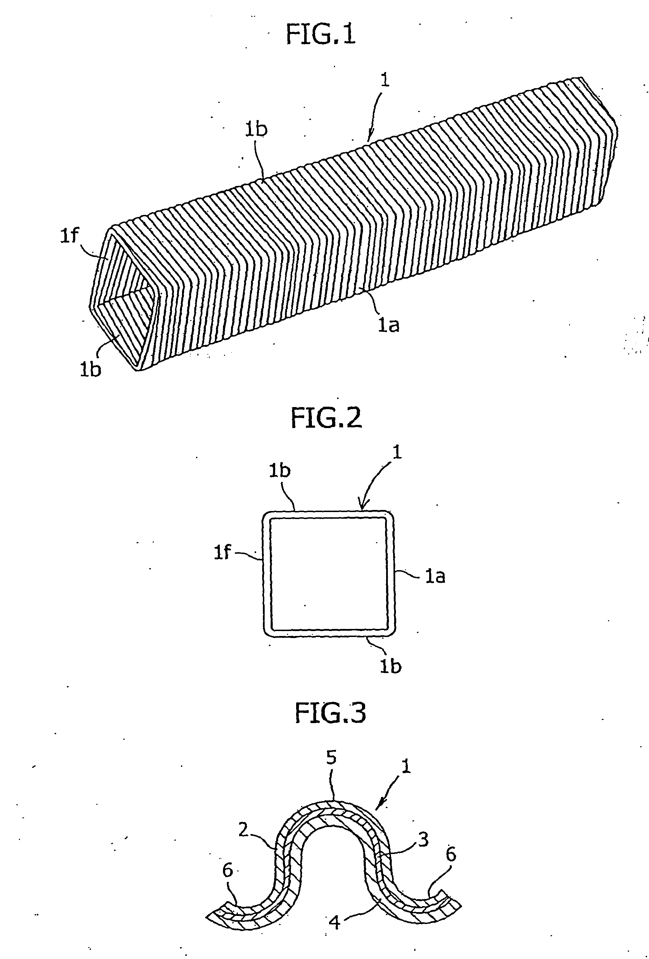

Although Figs. 1, 2 and 6 do not conform to the requirement of claim 1, they and the related text contain important and explanatory material essential to the understanding of the present invention.

In Figs. 1 to 3, an impact energy absorber 1 has a square cylindrical shape in cross section, and is formed by lapping three-layer band materials of an outside layer material 2, an intermediate layer material 3, and an inside layer material 4 in that order from the outside. This cross-sectional construction is one example, and the number of layers and the material can be selected arbitrarily. As the outside layer material 2 and the inside layer material 4 of these layer materials, for example, a waterproof kraft paper, a water-resistant kraft paper, a resin film, an aramid paper, a heat-resistant paper, or the equivalent is used. The thickness of the layer materials 2 and 4 is 0.03 to 0.25 mm. As the intermediate layer material 3, a metallic sheet of, for example, aluminum, stainless steel, copper, iron, titanium, or the equivalent or an alloy can be used. The thickness of the intermediate layer material 3 is 0.05 to 0.15 mm.

In the impact energy absorber 1 in accordance with this embodiment, a hard aluminum foil is used as the intermediate layer material 3 and a water-resistant kraft paper is used as the outside and inside layer materials 2 and 4, and the outside layer material 2, the intermediate layer material 3, and the inside layer material 4 are lapped and wound spirally to form a cylinder. Concave portions 5 and convex portions 6 that are continuous or discontinuous in the axial direction are formed on the lapped layer materials 2 to 4, so that the whole of the impact energy absorber 1 from one side to the other side in the axial direction is formed in a corrugated shape. The impact energy absorber 1 can be extended in the axial direction as long as the material continues, and hence it is formed so as to have an appropriate length.

Since the impact energy absorber 1 is formed with the concave and convex portions 5 and 6, it can be bent into an arc shape or an S shape in a fixed range. Also, if an axial tensile load or compressive load is applied to the impact energy absorber 1, the impact energy absorber 1 can be extended or contracted elastically until the load reaches a certain value. Also, if a bending moment is applied to the impact energy absorber 1, the impact energy absorber 1 is deformed elastically until the moment reaches a certain value. By removing the load or the moment, the impact energy absorber 1 is restored to its original shape.

The strength of the impact energy absorber 1 can be adjusted by changing the materials of the outside and inside layer materials 2 and 4 and the intermediate layer material 3, and can also be finely adjusted by changing the height and pitch of the concave and convex portions 5 and 6 of the surface.

After the impact energy absorber 1 has been formed into a fixed length, it can be manufactured by changing materials of the outside and inside layer materials 2 and 4 and the intermediate layer material 3 at the joints of the band material. By providing such material change points, the strength of the impact energy absorber 1 can be changed sectionally. Also, the thickness of the intermediate layer material 3 can be changed midway while the material thereof is kept as is, by which the strength of the impact energy absorber 1 can be changed sectionally.

The cross-sectional shape of the impact energy absorber 1 can be deformed into a square shape after being formed into a circular shape. In addition to the square shape, a rectangular shape, a pentagonal shape, and other shapes may be used. Also, the circular cross section can be used as it is. However, this circular cross section provides a smaller deformation energy absorbing amount than the square cross section (refer to JP10-029482A1). Also, the cross-sectional shape of the impact energy absorber 1 can be changed from square shape to rectangular shape or other shapes in an arbitrary portion without changing the circumferential length thereof.

Next, an example of an impact energy absorbing structure using the impact energy absorber 1 will be explained.

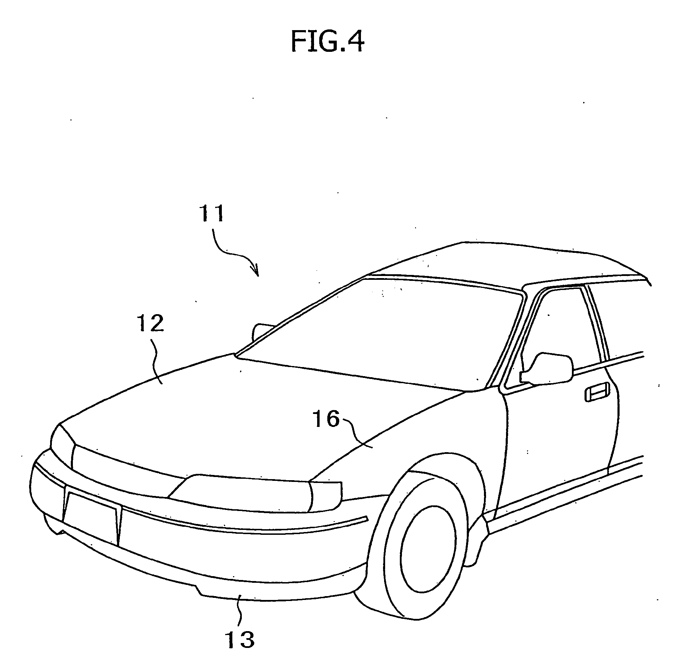

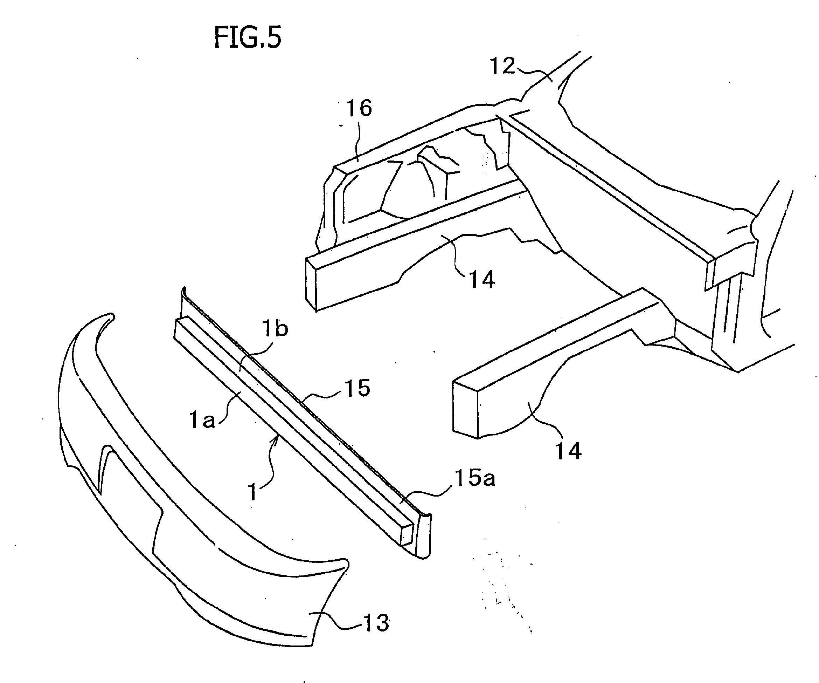

Fig. 4 shows a motor vehicle 11, and Fig. 5 is an exploded view of a front part of a vehicle body 12. In a lower part of the vehicle body 12, a pair of right and left sub-frames 14 extend in the front and rear direction of vehicle body, and in the front end portions of the sub-frames 14, a plate-shaped bumper beam 15 is installed. In front of the bumper beam 15, a bumper cover 13 covering the bumper beam 15 is mounted. The bumper cover 13 is fixed to lower portions of fender panels 16 located in the front side portions of the vehicle body 12 or in the attachment portions of a cross member, not shown, on the vehicle body side.

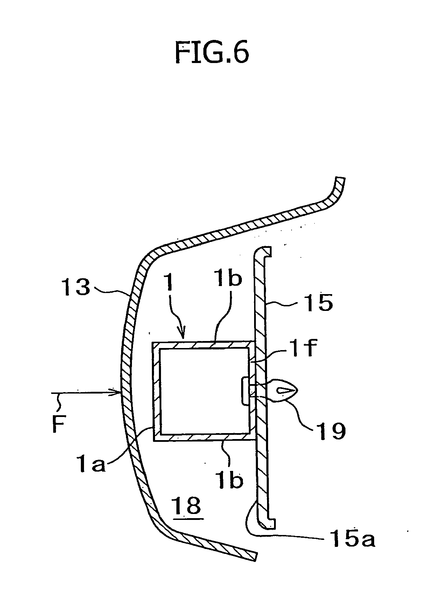

As shown in Fig. 6, the impact energy absorber 1 is disposed in a clearance 18 formed between the bumper cover 13 and the bumper beam 15. The impact energy absorber 1 is installed on the front surface of the bumper beam 15 so that the axial direction thereof coincides with the vehicle width direction.

Since the impact energy absorber 1 is flexible, it can be installed even if the bumper beam 15 is curved. Moreover, since impact energy absorber 1 is hollow and hence light in weight, it does not increase the weight of vehicle body.

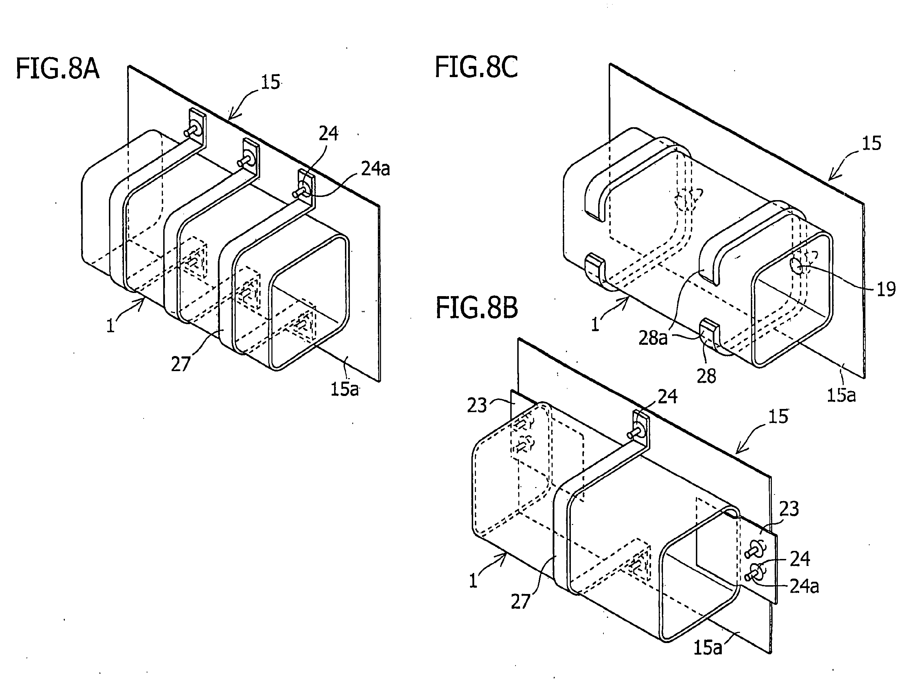

The impact energy absorber 1 is installed by using clips, screws, bands, an adhesive, or the like. Figs. 7A to 7D and Figs. 8A to 8C specifically show the methods of installation.

Fig. 7A shows an example in which clips 19 are fixed to the impact energy absorber 1, and elongated holes 20 are formed in the bumper beam 15. After the clip 19 has been inserted into the elongated hole 20, the impact energy absorber 1 is slid in the transverse direction. Thereby, the shank of the clip 19 is engaged with a narrow portion (not shown) of the elongated hole 20, and hence the movement of the impact energy absorber 1 is regulated. Although Fig. 7A shows only two installation portions of the clip 19, actually many installation portions of the clip 19 are provided because the impact energy absorber 1 extends in the vehicle width direction of the bumper beam 15. The same is true in Figs. 7B and 7C and Figs. 8A to 8C.

In the example shown in Fig. 7B, a band 21 is wound around the impact energy absorber 1, and the clip 19 having an expanded head is fixed to the band 21. The clip 19 is pushed into a round hole formed in the bumper beam 15, by which the impact energy absorber 1 is installed to the bumper beam 15.

In the example shown in Fig. 7C, the clip 19 is fixed to a holder 22 provided with a connecting portion 22a and a hinge portion 22b, and the holder 2 is fixed to the bumper beam 15 by inserting the clip 19 into a round hole formed beforehand in the bumper beam 15. The connecting portion 22a of the holder 22 is of a type such that a hook provided, for example, on one member is engaged with a concave portion provided in the other member, so that the connection can be severed by undoing the hook. Therefore, the impact energy absorber 1 can be detached from the bumper beam 15.

Fig. 7D shows an example in which both end portions of the inner peripheral surface of the impact energy absorber 1 each are pressed by a height difference portion of an attachment member 23, and the impact energy absorber 1 is fixed by inserting screw clips 24 through holes formed on the other side of the attachment member 23. The impact energy absorber 1 is supported by the height difference portion of the attachment member 23. In an intermediate portion of the impact energy absorber 1, a through hole 26 is formed on the front surface side, and the intermediate portion of the impact energy absorber 1 is fastened to the bumper beam 15 by using a bolt 25. By pressing in a screw 24a of the screw clip 24, the tip end portion of the screw clip 24 is expanded, so that the screw clip 24 is fixed to the bumper beam 15 by the tip end portion of the screw clip 24. This fixing mode can be applied to the above-described clip 19.

Fig. 8A shows a state in which the impact energy absorber 1 is installed by using U-shaped holders 27. The impact energy absorber 1 is arranged in an installation location on the front surface of the bumper beam 15, and the screw clips 24 are inserted through holes in both end portions of the holder 27 while supporting the impact energy absorber 1 by the holder 27, by which the impact energy absorber 1 is fixed.

Fig. 8B shows an example in which both end portions of the impact energy absorber 1 are fixed by the above-described attachment member 23 (refer to Fig. 7D), and a plurality of locations in the intermediate portion (one location in the figure) are fixed by the holder 27 (refer to Fig. 8A).

In the example shown in Fig. 8C, C-shaped holders 28 are installed beforehand in a plurality of locations on the bumper beam 15 by using the clips 19 with the opening side of the holder 28 being directed to the front. The impact energy absorber 1 is locked and installed by locking portions 28a curved to the inside of the holder 28. By expanding the locking portion 28a, the impact energy absorber 1 can be detached from the bumper beam 15.

The band 21 and the holders 22, 27 and 28 can be formed by using a publicly known material such as metal and synthetic resin.

Next, the operation of the impact energy absorber 1 will be explained.

As shown in Fig. 6, when a load F is applied from the front, if the bumper cover 13 deforms to the rear, the bumper cover 13 first comes into contact with a front surface 1a of the impact energy absorber 1 so that the impact energy absorber 1 receives the load F. At this time, since the cross-sectional area of the impact energy absorber 1 is square, opposed horizontal portions 1b, 1b support the load, and the horizontal portion 1b keeps its original shape without deforming substantially until the load reaches a fixed value. If the load exceeds the fixed value, the horizontal portions 1b buckle, and hence the impact energy absorber 1 plastically deforms quickly.

Thus, in the early state, the impact energy absorber 1 does not deform even if being subjected to a large load, and deforms when being subjected to a load exceeding the fixed value. Showing this phenomenon by the load-deformation curve of Fig. 9, the deformation of the impact energy absorber 1 is shown by a trapezoidal curve as shown by the curve 50b. This curve 50b can absorb a larger impact energy than the curve 50a showing the foam explained in the conventional example.

In the case where the impact energy absorber 1 is arranged in the bumper portion, the target strength thereof is about 2 kN/cm². Comparing the impact energy absorber 1 with the hard foam, if the energy absorbing amount is equal, it is necessary only that thickness of the impact energy absorber 1 in the front and rear direction of vehicle body is about two-thirds of the thickness of the foam. For example, in the case where the impact energy absorber 1 of a square shape having one side of 60 mm, a 90 mm thickness (Fig. 16, L2) is needed for the foam. Therefore, the impact energy absorber 1 can be disposed in a limited space in a clearance between the bumper cover 13 and the bumper beam 15.

Actually, depending on the shape etc. of the bumper cover 13, each portion of the bumper cover 13 sometimes has a different strength. For example, in the case where the corner portion of the bumper cover 13 has a higher rigidity than the central portion thereof, as shown in Fig. 10, the strength (energy absorbing amount) of both end portions 1c of the impact energy absorber 1 is decreased as compared with the strength of a central portion 1d. Preferably, the combined strength of the bumper cover 13 and the impact energy absorber 1 should be uniform in the vehicle width direction. This configuration can be made, for example, by changing the material, thickness, or the like of the intermediate layer material 3 in the central portion 1d and the end portion 1c of the impact energy absorber 1. Since the layer materials 2 and 4 also contribute to the absorption of energy, in the case where a delicate change is needed, the above-described configuration can be made by changing the thicknesses of the layer materials 2 and 4. Further, the height and pitch of the peaks of the concave and convex portions 5 and 6 of the impact energy absorber 1 may be changed on the midway of the impact energy absorber 1.

Also, as shown in Fig. 11, the clearance 18 between the bumper cover 13 and the bumper beam 15 is sometimes not constant as a whole and different in each portion. For example, in the case where the central portion 1d of the bumper cover 13 is wide and both end portions 1 c are narrow, the impact energy absorber 1 that has a different cross-sectional area in the central portion 1d and both end portions 1c may be arranged. Since the strength is changed by changing the cross-sectional shape of the impact energy absorber 1, the material or thickness of the intermediate layer material 3 is changed accordingly, by which the strength can be adjusted.

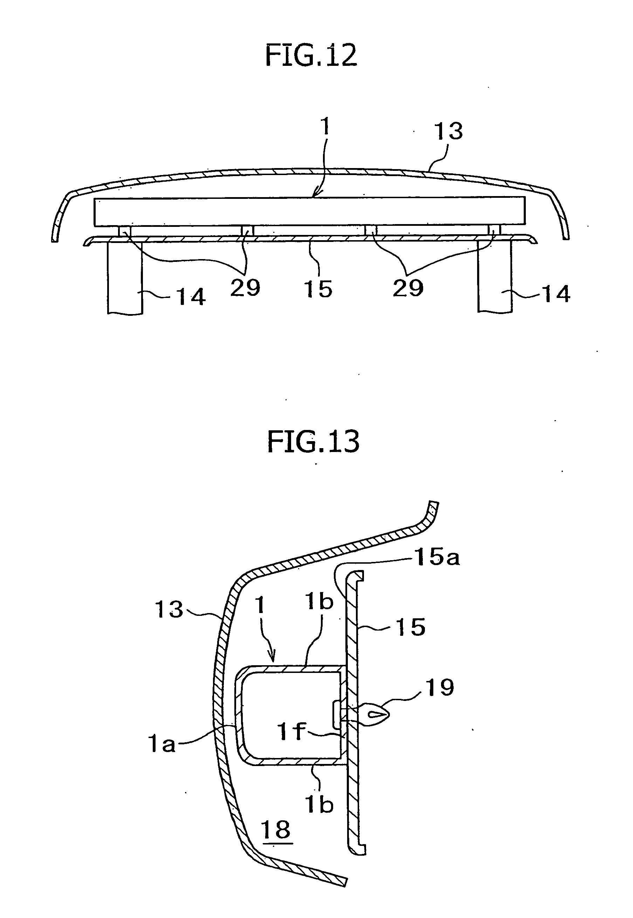

Fig. 12 shows an example in which a clearance is provided between a front surface 15a of the bumper beam 15 and the impact energy absorber 1, and a plurality of ribs 29 extending in the vertical direction are formed in the clearance. One reason why the impact energy absorber 1 can absorb large impact energy is that when the impact energy absorber 1 deforms plastically in the cross-sectional direction, the concave and convex portions 5 and 6 of the impact energy absorber 1 deform in the extending direction to absorb impact energy. That is to say, the reason is that the impact energy absorber 1 deforms plastically in the cross-sectional direction and also deforms plastically in the axial direction. Therefore, when a load is applied from the front to between the ribs 29, the impact energy absorber 1 deflects to the rear side so that the rear surface of the impact energy absorber 1 extends, so that as a whole, the concave and convex portions 5 and 6 extend and the impact energy absorber 1 is collapsed so as to be deformed plastically in the axial direction, whereby a large energy absorbing force can be obtained.

Fig. 13 shows an example in which the front surface portion 1a of the impact energy absorber 1 is formed so as to be parallel with the curved surface of the bumper cover 13 in accordance with the curvature of the bumper cover 13. By matching the shape of the front surface portion 1a with the shape of the bumper cover 13, the trackability of the bumper cover 13 and the front surface portion 1a is improved, and hence the horizontal portions 1b buckle surely.

In the case where the front surface 15a of the bumper beam 15 is curved, a rear surface portion 1f of the impact energy absorber 1 should be curved in accordance with the curved surface of the bumper beam 15 so that the whole of the rear surface portion 1f is brought into contact with the front surface 15a. Thereby, the installation stability of the impact energy absorber 1 is improved.

In the above-described embodiment, an ordinary passenger car is taken as the example. However, the impact energy absorber 1 can be disposed in the bumper portion of various types of motor vehicle, such as a truck and a minivan. Also, since the impact energy absorber 1 has flexibility, it can be disposed so as to have an arbitrary shape: for example, it is curved in accordance with the shape of the bumper portion.

In the above description, one impact energy absorber 1 is disposed so that the axis thereof is horizontal. However, a plurality of impact energy absorbers may be disposed horizontally in a plurality of stages. Also, one impact energy absorber may be divided into a plurality of sections.

## Claims

1. An impact energy absorbing structure for a vehicle, comprising:
a bumper beam (15) extending in the width direction of a vehicle body (12),
a bumper cover (13) covering the bumper beam,
an impact energy absorber disposed between the bumper beam and the bumper cover, the impact energy absorber being disposed so that the axial direction thereof coincides with the width direction of the vehicle body, where the cross-section of said impact energy absorber has a square shape and where a front surface portion (1 a) of the impact energy absorber facing said bumper cover is curved so as to coincide with the inner surface shape of the bumper cover, **characterised in that** the impact energy absorber (1) is formed into a cylindrical shape by lapping a band material made of a paper (2, 4) and/or a resin and a band material made of a metal (3) on each other and winding the band materials spirally, and the wall portion thereof is formed with concave (6) and convex (5) portions arranged in a spiral form or a ring form.

2. An impact energy absorbing structure for a vehicle according to claim 1, wherein the impact energy absorber is installed on the front surface of the bumper beam by a clip, screw, band, or adhesion.

3. An impact energy absorbing structure for a vehicle according to claim 1 or claim 2, wherein the thickness or material of at least one of the band material made of a metal and the band material made of a paper and/or a resin constituting the impact energy absorber is changed in the axial direction in accordance with the strength of each portion in the vehicle body width direction of the bumper cover (13), thus the strength of the impact energy absorber (1c, 1d, 1c) being different in each portion in the vehicle body width direction.

4. An impact energy absorbing structure for a vehicle according to any one of claims 1 to 3, wherein the cross-sectional shape (1c, 1d, 1c) thereof changes in the axial direction in accordance with a clearance between the bumper cover (13) and the bumper beam (15).

5. An impact energy absorbing structure for a vehicle according to any one preceding claim wherein a rib (29) extending in the vertical direction is formed on the front surface of the bumper beam (15) and the impact energy absorber (1) is disposed via the rib.

6. An impact energy absorbing structure for a vehicle according to any one preceding claim wherein the impact energy absorber has opposed horizontal portions (1b) to support an impact load, said horizontal portions buckling if said impact load exceeds a fixed value.

7. An impact energy absorbing structure for a vehicle according to any one preceding claim, wherein there are a plurality of impact energy absorbers (1) provided in the width direction of the vehicle.

## Patentansprüche

1. Aufprallenergie-Dämpfungsstruktur für ein Fahrzeug, umfassend einen Stoßfänger-Träger (15), der in Breitenrichtung eines Fahrzeugkörpers (12) verläuft, eine Stoßfänger-Abdeckung (13) zum Abdecken des Stoßfänger-Trägers, einen Aufprallenergie-Dämpfer, der zwischen dem Stoßfänger-Träger und der Stoßfänger-Abdeckung angebracht und so angeordnet ist, daß seine Axialrichtung mit der Breitenrichtung des Fahrzeugkörpers zusammenfällt, wobei der Querschnitt des Aufprallenergie-Dämpfers eine Rechteckform aufweist und ein vorderer Oberflächenabschnitt (1 a) des Aufprallenergie-Dämpfers, welcher der Stoßfänger-Abdeckung zugewandt ist, so gekrümmt ist, daß er sich mit der Form der Innenfläche der Stoßfänger-Abdeckung deckt, **dadurch gekennzeichnet, daß** der Aufprallenergie-Dämpfer (1) in einer zylindrischen Form ausgebildet wird durch Übereinanderlegen eines Bandmateriales, das aus einem Papier (2, 4) und/oder einem Harz gefertigt ist, und eines Bandmateriales, das aus einem Metall (3) besteht, und durch spiralförmiges Winden der Bandmaterialien, und daß sein Wandabschnitt mit konkaven (6) und konvexen (5) Abschnitten ausgebildet ist, die spiralförmig oder in einer Ringform angebracht sind.

2. Aufprallenergie-Dämpfungsstruktur für ein Fahrzeug nach Anspruch 1, bei der der Aufprallenergie-Dämpfer an der Vorderfläche des Stoßfänger-Trägers durch einen Clip, eine Schraube, ein Band oder Kleben montiert ist.

3. Aufprallenergie-Dämpfungsstruktur für ein Fahrzeug nach Anspruch 1 oder Anspruch 2, bei der die Dicke oder das Material von wenigstens einem der Bandmaterialien aus Metall sowie aus Papier und/oder Harz, die den Aufprallenergie-Dämpfer bilden, in der Axialrichtung geändert wird entsprechend der Festigkeit jedes Abschnitts der Stoßdämpfer-Abdeckung (13) in Querrichtung des Fahrzeugkörpers, wodurch die Festigkeit des Aufprallenergie-Dämpfers (1c, 1d, 1 c) in jedem Abschnitt in Querrichtung des Fahrzeugkörpers unterschiedlich ist.

4. Aufprallenergie-Dämpfungsstruktur für ein Fahrzeug nach einem der Ansprüche 1 bis 3, bei der sich deren Querschnittsform (1c, 1d, 1c) in Axialrichtung in Übereinstimmung mit einem Zwischenraum zwischen der Stoßfänger-Abdeckung (13) und dem Stoßfänger-Träger (15) ändert.

5. Aufprallenergie-Dämpfungsstruktur für ein Fahrzeug nach einem vorhergehenden Anspruch, bei der eine in vertikaler Richtung verlaufende Rippe (29) an der Vorderfläche des Stoßdämpfer-Trägers (15) ausgebildet und der Aufprallenergie-Dämpfer (1) über die Rippe angebracht ist.

6. Aufprallenergie-Dämpfungsstruktur für ein Fahrzeug nach einem vorhergehenden Anspruch, bei welcher der Aufprallenergie-Dämpfer einander gegenüberliegende horizontale Abschnitte (1 b) umfaßt, um eine Stoßbelastung abzustützen, wobei die horizontalen Abschnitte sich ausbeulen, wenn die Stoßbelastung einen Fixwert übersteigt.

7. Aufprallenergie-Dämpfungsstruktur für ein Fahrzeug nach einem vorhergehenden Anspruch, bei der eine Vielzahl von Aufprallenergie-Dämpfern (1) in Breitenrichtung des Fahrzeuges vorgesehen sind.

## Revendications

1. Structure d'absorption d'énergie d'impact pour un véhicule, comprenant :
une poutre de pare-chocs (15) s'étendant dans le sens de la largeur d'un corps de véhicule (12),
un couvercle de pare-chocs (13) recouvrant la poutre de pare-chocs,
un absorbeur d'énergie d'impact disposé entre la poutre de pare-chocs et le couvercle de pare-chocs, l'absorbeur d'énergie d'impact étant disposé de sorte que sa direction axiale coïncide avec le sens de la largeur du corps de véhicule, où la section transversale dudit absorbeur d'énergie d'impact a une forme carrée et où une partie de surface avant (1a) de l'absorbeur d'énergie d'impact faisant face audit couvercle de pare-chocs est incurvée afin de coïncider avec la forme de surface interne du couvercle de pare-chocs, **caractérisée en ce que** l'absorbeur d'énergie d'impact (1) est formé selon une forme cylindrique en faisant chevaucher un matériau de bande réalisé avec du papier (2, 4) et/ou une résine et un matériau de bande réalisé à partir d'un métal (3) l'un sur l'autre et en enroulant les matériaux de bande en spirale, et sa partie de paroi est formée avec des parties concave (6) et convexe (5) agencées sous forme de spirale ou sous une forme annulaire.

2. Structure d'absorption d'énergie d'impact pour un véhicule selon la revendication 1, dans laquelle l'absorbeur d'énergie est installé sur la surface avant de la poutre de pare-chocs par une attache, une vis, une bande ou par adhésion.

3. Structure d'absorption d'énergie d'impact pour un véhicule selon la revendication 1 ou la revendication 2, dans laquelle l'épaisseur du matériau d'au moins l'un parmi le matériau de bande réalisé à partir d'un métal et le matériau de bande réalisé à partir d'un papier et/ou une résine constituant l'absorbeur d'énergie d'impact est modifiée dans la direction axiale selon la résistance de chaque partie dans le sens de la largeur du corps de véhicule du couvercle de pare-chocs (13), ainsi la résistance de l'absorbeur d'énergie d'impact (1c, 1d, 1c) est différente dans chaque partie dans le sens de la largeur du corps de véhicule.

4. Structure d'absorption d'énergie d'impact pour un véhicule selon l'une quelconque des revendications 1 à 3, dans laquelle sa forme transversale (1c, 1d, 1c) change dans la direction axiale selon un jeu entre le couvercle de pare-chocs (13) et la poutre de pare-chocs (15).

5. Structure d'absorption d'énergie d'impact pour un véhicule selon l'une quelconque des revendications précédentes, dans laquelle une nervure (29) s'étendant dans la direction verticale est formée sur la surface avant de la poutre de pare-chocs (15) et l'absorbeur d'énergie (1) est disposé via la nervure.

6. Structure d'absorption d'énergie d'impact pour un véhicule selon l'une quelconque des revendications précédentes, dans laquelle l'absorbeur d'énergie d'impact a des parties horizontales opposées (1b) pour supporter une charge d'impact, lesdites parties horizontales faisant des boucles si ladite charge d'impact dépasse une valeur fixe.

7. Structure d'absorption d'énergie d'impact pour un véhicule selon l'une quelconque des revendications précédentes, dans laquelle on trouve une pluralité d'absorbeurs d'énergie d'impact (1) prévus dans le sens de la largeur du véhicule.
